# EUROPEAN PATENT APPLICATION

(11) **EP 4 583 324 A1**
(43) Date of publication of application: **09.07.2025**
(21) Application number: 24150723.5
(22) Date of filing: 08.01.2024
(51) Int. Cl.: H01R 13/52, H01R 13/53, H02G 15/04, H02G 15/06, H01R 13/50

(54) **ASSEMBLIES AND METHODS FOR TETHERED COVER ASSEMBLIES OF CABLE ACCESSORY**

(71) Applicant: ABB Schweiz AG, 5400 Baden (CH)
(72) Inventor: FONG, Robert, Bethlehem, 18015 (US); HUTTMAN, Ryan, Milford, 18337 (US)
(74) Representative: Zimmermann & Partner Patentanwälte mbB

(57) **Abstract**

A cover assembly includes a cover, the cover defining a first cavity and a second cavity, the first cavity sized to receive a port rim of an access port of a cable accessory therein, and the second cavity sized to receive an end of a hot stick therein. The cover assembly also includes a tether, the tether including a tether line extending from the cover, and a tether end positioned at an end of the tether line, the tether end having an enlarged end body. The cover assembly is configured to be removably coupled with the cable accessory.

## Description

### BACKGROUND

The field of the disclosure relates generally to systems and methods of accessories in electrical power systems, and more particularly, to assemblies and methods for cable accessories used in electrical distribution systems.

A cable accessory is used to provide an access to the power cables and a connecting point with other components in an electric power distribution system. An interface plug port or test point is provided by the cable accessory for a lineman to test the voltage of the power line and to ensure the line is de-energized before work may be performed on the distribution system. Known assemblies and methods are disadvantaged in some aspects in meeting the needs in power distribution systems and improvements are desired.

### BRIEF DESCRIPTION

In one aspect, a cover assembly includes a cover, the cover defining a first cavity and a second cavity, the first cavity sized to receive a port rim of an access port of a cable accessory therein, and the second cavity sized to receive an end of a hot stick therein. The cover assembly also includes a tether, the tether including a tether line extending from the cover, and a tether end positioned at an end of the tether line, the tether end having an enlarged end body. The cover assembly is configured to be removably coupled with the cable accessory.

In another aspect, a method of assembling an accessory assembly is provided. The method includes providing a cover assembly. The cover assembly includes a cover, the cover defining a first cavity and a second cavity, the first cavity sized to receive a port rim of an access port of a cable accessory therein, and the second cavity sized to receive an end of a hot stick therein. The cover assembly also includes a tether, the tether including a tether line extending from the cover, and a tether end positioned at an end of the tether line. The tether end has an enlarged end body. The method also includes providing the cable accessory. The cable accessory includes a housing, and a projection projecting from the housing and defining a first aperture sized to receive the tether end therethrough. The method also includes pushing the tether end through the first aperture.

### BRIEF DESCRIPTION OF DRAWINGS

These and other features, aspects, and advantages of the present disclosure will become better understood when the following detailed description is read with reference to the accompanying drawings in which like characters represent like parts throughout the drawings.
FIG. 1 shows an example accessory assembly.
FIG. 2A shows an example cover assembly of the accessory assembly shown in FIG. 1.
FIG. 2B shows another example cover assembly of the accessory assembly shown in FIG. 1.
FIG. 3A shows one more example cover assembly.
FIG. 3B shows one more example cover assembly.
FIG. 4 is a flow chart of an example method of assembling an accessory assembly described in FIGs. 1-3B.

### DETAILED DESCRIPTION

The disclosure includes electrical accessories having tethered cover assemblies. Method aspects will be in part apparent and in part explicitly discussed in the following description.

A cable accessory provides access to the power cable and other components in a power distribution system. An interface plug port or a test point is provided by the cable accessory such that a test device such as a voltage measuring device may be engaged in the interface plug port or the test point to determine whether the line is fully de-energized to ensure the safety of the personnel and the power distribution system, before work may be performed. As used herein, ports provided by an cable accessory, such as an interface plug port or a test point, are collectively referred to as an access port. A power distribution system may be located in various environments such as a in a rugged terrain or being underwater. Once work is finished and power is returned to the power distribution system, a cover needs to have been placed on the access port to cover the entry to the access port and limit debris and/or liquid such as water from entering into the distribution system. The cover, however, is often misplaced after being removed from the access port during the service, resulting in the cover being lost or becoming dirty. The cover would need to be cleaned or a new cover needs to be placed on the access port, causing additional hassle for the crew. Further, a spare cover may not be readily available with the crew. As a result, the access port is exposed, presenting as a safety risk for the crew and/or the distribution system, especially for distribution systems carrying electricity at a relatively high voltage such as being in the range of medium voltage between 1 kilovolt (kV) and 35 kV.

The assemblies and methods described herein provide tethered cover assemblies such that the cover assembly is tethered to the cable accessory, thereby facilitating the cover assembly to remain coupled with the cable accessory during the service of the distribution system and eliminating the loss or misplacement of the cover assembly. Labor and costs are saved and the level of safety is increased. The assemblies and methods described herein also facilitate the compliance with requirements under the International Electrotechnical Commission (IEC) electrical standards.

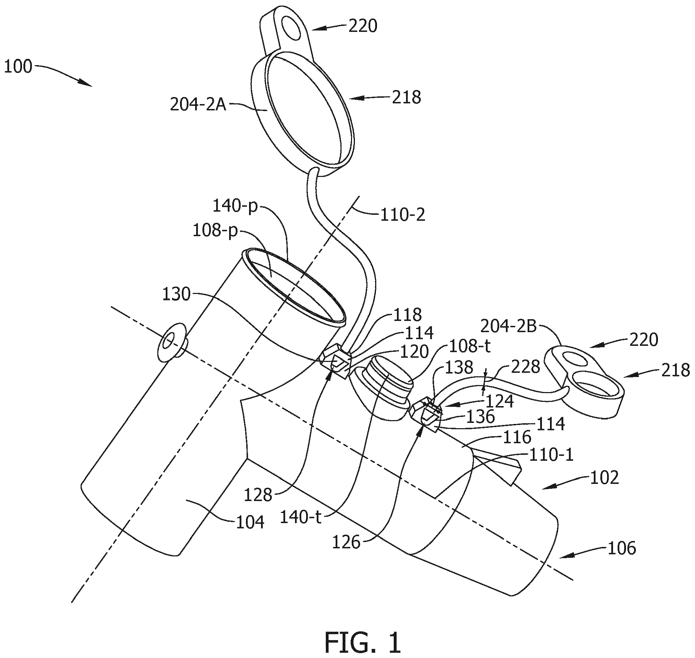

FIG. 1 shows an example accessory assembly 100. In the example embodiment, accessory assembly 100 includes a cable accessory 102. Cable accessory 102 is configured to carry a medium voltage electrical signal. Cable accessory 102 includes a housing 104. Housing 104 is fabricated from an insulating material such as ethylene propylene diene monomer (EPDM) polymer to protect utility personnel from injuries caused by being in contact with electrically conducting components of cable accessory 102 when cable accessory 102 is energized. Components of cable accessory 102, such as ports, are at least partially covered by housing 104. In some embodiments, housing 104 of a separable cable accessory 102 is fabricated from a conductive material, facilitating current to flow to the ground.

In the example embodiment, cable accessory 102 includes a cable port 106. Cable port 106 is configured to receive and retain a cable (not shown) for carrying electricity. Cable accessory 102 further includes an interface plug port 108-p. Interface plug port 108-p is configured to engage with a detector, which, when engaged with interface plug port 108-p, is in electrical contact with the cable and used to determine whether the cable is energized.

In the example embodiment, cable port 106 defines a first axis 110-1. Interface plug port 108-p defines a second axis 110-2. In the depicted embodiment, first axis 110-1 is at a non-zero angle with second axis 110-2. In some embodiments, first axis 110-1 and second axis 110-2 is parallel with one another, where cable port 106 is positioned opposite interface plug port 108-p.

In the example embodiment, cable accessory 102 includes a test point 108-t. Test point 108-t is capacitively coupled with the conducting portions of cable accessory 102 (e.g., the cable), which enables a presence of electrical signals on the conducting portions to be detected at test point 108-t, such as using a hot stick voltage sensor.

Accordingly, access port 108 may be used to determine whether the cable is de-energized before work is performed on the cable. For example, if the system is de-energized, the lineman may serve as a secondary check to measure one or more electrical quantities, such as voltage, at access port 108. If the voltage is zero, the system is confirmed to be de-energized and work may be performed by utility personnel.

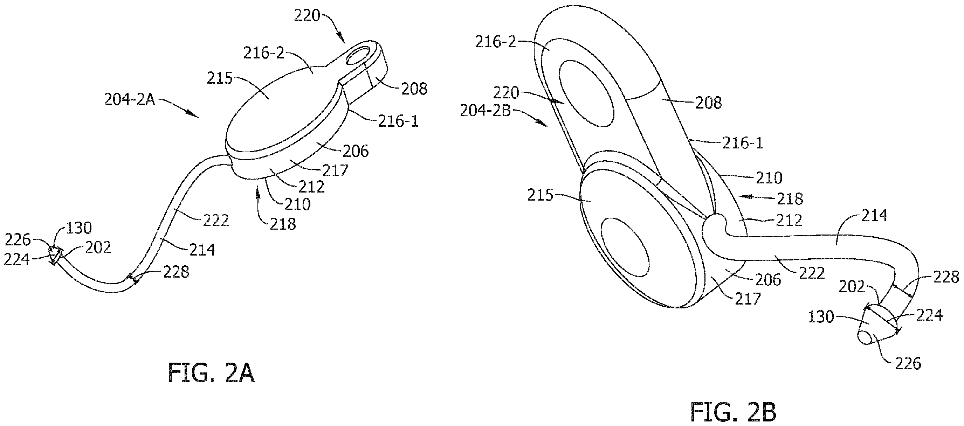

In the example embodiment, housing 104 further includes one or more projections 114 projecting from an exterior surface 116 of housing 104. Projection 114 includes one or more projection sides 120 and a projection top 118 extending from projection sides 120. Projection sides 120 extend from exterior surface 116. Projection top 118 is at a non-zero angle with projection sides 120. Projection top 118 defines a first aperture 124. Projection sides 120 define one or more second apertures 126. Projection 114 is hollow, where projection sides 120 and projection top 118 define a projection cavity 128. Because tether end 130 includes an enlarged end body 202 (see FIGs. 2A and 2B described later), tether end 130 may protrude partially out of projection sides 120 at second aperture 126. Second aperture 126 is defined by an aperture rim 136. Aperture rim 136 along second aperture 126 may have a shape of triangle. Aperture rim 136 may be in other shapes, such as circle, polygon, or an irregular shape, that enable accessory assembly 100 to function as described herein. Aperture rim 136 may have a shape matching the shape of tether end 130 to facilitate tether end 130 to protrude partially out of second aperture 126.

In the example embodiment, accessory assembly 100 includes one or more cover assemblies 204. FIGs. 2A and 2B show example cover assemblies 204-2A, 204-2B. Cover assembly 204 is configured to be coupled with access port 108. Cover assembly 204 includes a cover 212 and a tether 214 extending from cover 212. Cover 212 has a first side 216-1 and a second side 216-2 opposite first side 216-1. Cover 212 includes a cover body 206 defining a first cavity 218 with a cover rim 210 along first cavity 218. Cover body 206 includes a cover body top 215 and a cover body side 217. Cover rim 210 is the edge of cover body side 217. First cavity 218 may be in first side 216-1. First cavity 218 is sized to receive a port rim 140 of access port 108. Port rim 140 of interface plug port 108-p may have different dimensions from port rim 140 of test point 108-t. The dimensions of cover rim 210 are sized such that port rim 140 of access port 108 is fitted inside cover rim 210 and cover body 206 covers the entrance to access port 108. For example, if cover assembly 204-1 is configured to couple with interface plug port 108-p, the dimensions of cover rim 210 are slightly greater than the dimensions of port rim 140-p of interface plug port 108-p such that cover rim 210 fits around interface plug port 108-p and may provide a barrier against the entry of debris and/or liquid into interface plug port 108-p. If cover assembly 204-2 is configured to couple with test point 108-t, the dimensions of cover rim 210 are slightly greater than the dimensions of port rim 140-t of test point 108-t such that cover rim 210 fits around test point 108-t and may provide a barrier against entry of debris and/or liquid into test point 108-t. In some embodiments, the dimensions of cover rim 210 are smaller than the dimensions of port rim 140 such that cover body side 217 fits tightly around access port 108 and provides a watertight seal.

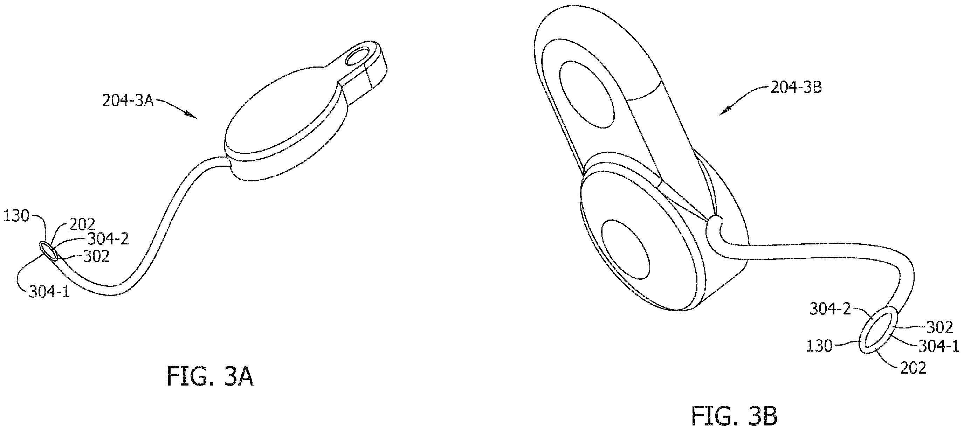

In the example embodiment, a second cavity 220 is defined in cover assembly 204. Second cavity 220 is sized to receive an end of a hot stick (not shown). A hot stick is an insulated pole used by electric utility workers to work on energized high-voltage electric power lines. Second cavity 220 is sized to receive a hook of the hot stick such that the hook engages with cover 212 in second cavity 220 and the hot stick pulls or pushes cover 212 to a desired position. Second cavity 220 may be defined in first side 216-1, second side 216-2, or both such that cover 212 may be removed from cable accessory 102 from either side 216. For example, as shown in FIGs. 1-2B (and FIGs. 3A and 3B described later), a plurality of second cavities 220 are defined in cover 212 with one second cavity 220 in first side 216-1 and another second cavity 220 in second side 216-2. Second cavity 220 may be positioned at a portion of cover 212, such as a brim 208, that is a different component of cover 212 from cover body 206. Brim 208 extends from cover body 206. Brim 208 may extend from cover body side 217. Second cavity 220 defined in brim 208 is advantageous in placing cover 212 over or removing cover 212 from port rim 140 of access port 108, where brim 208 functions as a lever in the placing or removal of cover 212, instead of only relying on the friction force between the hot stick and cover 212 if second cavity 220 is directly opposite first cavity 218.

In the example embodiment, cover assembly 204 includes tether 214. Tether 214 includes a tether line 222 extending from cover 212 and a tether end 130 positioned at an end of the tether line 222 that is opposite from cover 212. Tether line 222 is positioned between cover 212 and tether end 130. Tether end 130 includes an enlarged end body 202. Enlarged end body 202 has a transverse dimension 224 greater than a transverse dimension 228 of tether line 222 such that enlarged end body 202 is bulged from tether line 222. Tether end 130 may include a tapered tip 226 tapering from enlarged end body 202. Tapered tip 226 eases the entry of tether end 130 through first aperture 124 during the assembling of cover assembly 204 with cable accessory 102. In the depicted example, tether end 130 is in the shape of an arrowhead. Tether end 130 may be in other shapes such as a trapezoidal prism or a sphere, that enable cover assembly 204 to function as described herein. Cover assembly 204 may be fabricated with materials that is pliable such that tether end 130 may be deformed to be fitted through first aperture 124 of projection 114. An example material may be a thermosetting material or a thermoplastic material. Housing 104 may be fabricated with any material that is pliable such that first aperture 124 of projection 114 may be expanded to pull tether end 130 therethrough. An example material for housing 104 is EPDM rubber.

In the example embodiments, cover assembly 204-2A (FIG. 2A) is configured to fit with interface plug port 108-p and cover assembly 204-2B (FIG. 2B) is configured to fit with test point 108-t. In cover assembly 204-2A, the height of cover body 206 is approximately the same as a height of brim 208, while in cover assembly 204-2B, a height of cover body 206 is greater than a height of brim 208. A higher cover body 206 may provide an increased barrier between cover body 206 and port rim 140 of access port 108. Cover assembly 204-2A is depicted as being configured to be fitted with interface plug port xx and cover assembly 204-2B is depicted as being configured to be fitted with test point 108-t as examples for illustration purposes only. Cover assembly 204-2A may be configured to be fitted with test point 108-t and cover assembly 204-2B may be configured to be fitted with interface plug port 108-p by adjusting the dimension of cover rim 210 to correspond to test point 108-t for cover assembly 204-2A or correspond to interface plug port 108-p for cover assembly 204-2B.

Referring back to FIG. 1, in operation, to assemble cover assembly 204 with cable accessory 102, tether end 130 is pushed through first aperture 124 of projection 114. Once tether end 130 is pushed through first aperture 124, tether end 130 is received in projection cavity 128. The first aperture 124 has a dimension 138 that is greater than the transverse dimension 228 of tether line 222 and smaller than transverse dimension 224 of enlarged end body 202 (also see FIGs. 2A and 2B). The dimensions of second aperture 126 are smaller than transverse dimension 224 of enlarged end body 202. As a result, tether end 130 is retained by projection 114 in projection cavity 128.

In the example embodiment, cover assembly 204 is removably coupled with cable accessory 102. Cover assembly 204 is assembled with cable accessory 102 by pushing tether end 130 through first aperture 124. To remove or replace cover assembly 204, a pulling force may be applied to tether line 222 to pull tether end 130 out of projection cavity 128 through first aperture 124. Aspects of projection 114, such as the material and/or the size of projection 114, are designed such that projection 114 withstands the pulling force and the pulling does not damage projection 114. Tether 214 may also be removed from projection 114 through second aperture 126 with a tool such as tweezers, if cover 212 has been detached from tether 214. Removably coupling of cover assembly 204 with cable accessory 102 is advantageous in replacing cover assembly 204 when cover assembly 204 is damaged or does not provide desired performance.

In the example embodiment, cover assembly 204 is molded. Cover assembly 204 may be molded into one single piece. Housing 104 may be constructed by molding housing 104 onto the interior structures of cable accessory 102. In a molding process, raw material is heated and injected into a mold. The molded part is cured and removed from the mold. Tools used to hold some part of the shape of the molded part are also removed from the molded part.

Projection 114 adds complexity in molding cable accessory 102, where the mold needs to be redesigned for projection 114. The molding process limits the available designs of projection 114. For example, the projection cavity 128 of projection 114 is limited to designs that facilitate the tool or mold for molding projection 114 and/or cable accessory 102 to be removed from the molded part without causing damage to the molded part during the molding process. The added complexity may deter a person in the field from modifying a cable accessory to arrive at the assemblies and methods described herein.

The added complexity from projections 114 is reduced in assemblies and methods described herein by providing second aperture(s) 126 in projection 114. One or more second apertures 126 facilitate the retaining of tether end 130 in projection cavity 128 with enlarged end body 202 protruding partially out of second aperture 126. If projection sides 120 are closed and one or more second apertures 126 are not provided, a bulged cavity in projection 114 is needed in order to receive enlarged end body 202 therein. Such a bulged cavity creates difficulties in removing the tool used for maintaining the shape of projection 114 during the molding process without potential damage to the molded part. Therefore, cable accessory 102 with projection 114 may be manufactured by molding, instead of using a new manufacturing process. The mold or tool may be removed from the molded part with a relative ease. Accordingly, projection 114 provides a coupling mechanism for cover assembly 204 to be attached with cable accessory 102 without any other components, simplifying the assembling and manufacturing while reducing the added complexity.

FIGs. 3A and 3B show more example cover assemblies 204-3A, 204-3B. Compared to cover assembly shown in FIGs. 1-2B, where tether end 130 is in a shape of arrowhead, tether end 130 of cover assembly 204-3A, 204-3B includes a loop 302. When a first loop half 304-1 and a second loop half 304-2 of loop 302 are squeezed together, the transverse dimension of loop 302 is approximately the same as, or slightly greater or smaller than the dimension 138 of first aperture 124 (see FIG. 1) such that loop 302 may be squeezed through first aperture 124. Once loop 302 has been squeezed through second aperture 126, loop 302 relaxes back to its original shape and has a transverse dimension greater than the dimension of first aperture 124 and the dimension of second aperture 126, thereby retaining tether end 130 in projection cavity 128.

As depicted, cover assembly 204-3A (FIG. 3A) is configured to be fitted with interface plug port 108-p and cover assembly 204-3B (FIG. 3B) is configured to be fitted with test point 108-t. Similar to cover assemblies 204-2A, 204-2B, cover assembly 204-3A may be configured to be fitted with test point 108-t and cover assembly 204-3B may be configured to be fitted with interface plug port 108-p by changing the dimensions of cover rim 210 to correspond to test point 108-t or interface plug port 108-p, respectively.

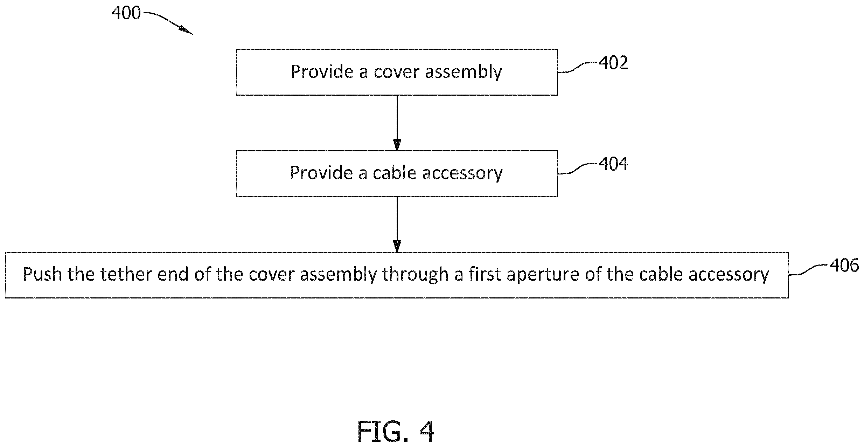

FIG. 4 is an example method 400 of assembling accessory assembly 100. In the example embodiment, method 400 includes providing 402 a cover assembly (e.g., cover assemblies 204). Method 400 further includes providing 404 a cable accessory (e.g., cable accessory 102). Method 400 also includes pushing 406 the tether end of the cover assembly through the first aperture of the cable accessory.

At least one technical effect of the systems and methods described herein includes (a) a tethered cover assembly for a cable accessory; and (b) the cover assembly removably coupled with the accessory.

Example embodiments of assemblies and methods for cable accessories are described above in detail. The systems and methods are not limited to the specific embodiments described herein but, rather, components of the systems and/or operations of the methods may be utilized independently and separately from other components and/or operations described herein. Further, the described components and/or operations may also be defined in, or used in combination with, other systems, methods, and/or devices, and are not limited to practice with only the systems described herein.

As used herein, an element or step recited in the singular and proceeded with the word "a" or "an" should be understood as not excluding plural elements or steps, unless such exclusion is explicitly recited. Furthermore, references to "example" or "one example" of the present disclosure are not intended to be interpreted as excluding the existence of additional examples that also incorporate the recited features. Further, to the extent that terms "includes," "including," "has," "contains," and variants thereof are used herein, such terms are intended to be inclusive in a manner similar to the term "comprises" as an open transition word without precluding any additional or other elements.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A cover assembly comprising:
a cover, the cover defining a first cavity and a second cavity, the first cavity sized to receive a port rim of an access port of a cable accessory therein, and the second cavity sized to receive an end of a hot stick therein; and
a tether, the tether comprising:
a tether line extending from the cover; and
a tether end positioned at an end of the tether line, the tether end having an enlarged end body,
wherein the cover assembly is configured to be removably coupled with the cable accessory.

2. The cover assembly of claim 1, wherein the tether end comprises a tapered tip extending from the enlarged end body.

3. The cover assembly of any of the preceding claims, wherein the tether end has a shape of an arrowhead.

4. The cover assembly of any of the preceding claims, wherein the cover further comprises:
a cover body defining the first cavity; and
a brim extending from the cover body and defining the second cavity.

5. The cover assembly of any of the preceding claims, wherein the cover has a first side and a second side opposite the first side, a plurality of second cavities defined on the first side and/or the second side.

6. The cover assembly of any of claims 1, 2, 4, and 5, wherein the tether end comprises a loop.

7. The cover assembly of any of the preceding claims, wherein the cover assembly is one single piece.

8. The cover assembly of any of the preceding claims, wherein the cover assembly is molded.

9. The cover assembly of any of the preceding claims, wherein the cover assembly is fabricated from a thermosetting material and/or a thermoplastic material.

10. An accessory assembly comprising:
a cable accessory comprising the access port; and
a cover assembly of any of the preceding claims,
wherein the cover assembly is removably coupled with the cable accessory.

11. The accessory assembly of claim 10, wherein the cable accessory further comprises:
a housing; and
a projection projecting from the housing and defining a first aperture sized to receive the tether end therethrough.

12. The accessory assembly of claim 11, wherein the projection comprises:
a projection top defining the first aperture; and
one or more projection sides extending from the projection top and defining a second aperture,
wherein the projection top and the one or more projection sides define a projection cavity sized to receive the tether end therein.

13. The accessory assembly of claim 12, wherein a rim along the second aperture has a shape matching a shape of the tether end.

14. The accessory assembly of any of claims 10-13, wherein the cable accessory comprises an interface plug port and a test point, and the accessory assembly comprises a first cover assembly and a second cover assembly, the first cover assembly removably coupled with the interface plug port, and the second cover assembly removably coupled with the test point.

15. A method of assembling an accessory assembly, comprising:
providing a cover assembly, the cover assembly including:
a cover, the cover defining a first cavity and a second cavity, the first cavity sized to receive a port rim of an access port of a cable accessory therein, and the second cavity sized to receive an end of a hot stick therein; and
a tether, the tether including:
a tether line extending from the cover; and
a tether end positioned at an end of the tether line, the tether end having an enlarged end body,
providing the cable accessory, the cable accessory including:
a housing; and
a projection projecting from the housing and defining a first aperture sized to receive the tether end therethrough; and
pushing the tether end through the first aperture.
